# EUROPEAN PATENT SPECIFICATION

(11) **EP 4 577 740 B1**
(45) Date of publication and mention of the grant of the patent: **22.04.2026**
(21) Application number: 23764231.9
(22) Date of filing: 21.08.2023
(51) Int. Cl.: F03D 1/06, F03D 7/02

(54) **PRE-BENT WIND TURBINE BLADE WITH MULTIPLE INFLECTION POINTS AND METHOD OF MAKING SAME**
VORGEBOGENE WINDTURBINENSCHAUFEL MIT MEHREREN UMLENKPUNKTEN UND VERFAHREN ZUR HERSTELLUNG DAVON
PALE D'ÉOLIENNE PRÉ-COURBÉE AVEC DE MULTIPLES POINTS D'INFLEXION ET SON PROCÉDÉ DE FABRICATION

(30) Priority: 24.08.2022 DK PA202270417
(43) Date of publication of application: 02.07.2025
(73) Proprietor: VESTAS WIND SYSTEMS A/S, 8200 Aarhus N (DK)
(72) Inventor: SMITH, James, 8200 Aarhus N (DK); RANDALL, Stephen, 8200 Aarhus N (DK); HAHN, Frank Hoelgaard, 8200 Aarhus N (DK); KENNARD, Robin John, 8200 Aarhus N (DK)
(74) Representative: Vestas Patents Department
(86) International application number: PCT/DK2023/050206
(87) International publication number: WO 2024/041710

(56) References cited:
- EP-A1- 2 404 743
- WO-A1-2018/215037
- US-A1- 2021 222 668

## Description

### Technical Field

The invention relates generally to wind turbines, and more particularly to a horizontal axis upwind wind turbine comprising a blade having a pre-bend that reduces moment loads on the blade pitch system to extend the working life of the blade pitch system. The invention also relates to a mould assembly and a method for making the pre-bent wind turbine blade.

### Background

Wind turbines are used to produce electrical energy using a renewable resource and without combusting a fossil fuel. Generally, a wind turbine converts kinetic energy from the wind into electrical power. A horizontal-axis wind turbine includes a tower, a nacelle located at the apex of the tower, and a rotor having a plurality of blades and supported in the nacelle by means of a shaft. The shaft couples the rotor either directly or indirectly with a generator, which is housed inside the nacelle. Consequently, as wind forces the blades to rotate, electrical energy is produced by the generator. Wind turbines may be located either on a land mass (onshore) or within a body of water (offshore).

In recent years, wind power has become a more attractive alternative energy source and the number of wind turbines, wind farms, etc. has significantly increased, both on land and offshore. Additionally, the size of wind turbines has also significantly increased, with modern wind turbine blades extending up to 80 meters in length, and is expected to further increase in the future. The increased length in the wind turbine blades has introduced a number of interesting design considerations for wind turbine designers and manufacturers. For example, with increasing blade length, the rearward deflection of the blade under aerodynamic loading also increases, with the maximum deflection typically occurring at the tip end of the blade. Should the deflection of the blade become significant, such as during unexpected high wind conditions, high turbulence conditions, or the like, it may be possible for the blade to come into contact with the tower. A tower strike may damage the tower or the blade such that repair or replacement procedures must be implemented to make the wind turbine operational again. These procedures are expensive and may result in the wind turbine being inoperable and off-line for an extended period of time, costing the wind turbine owner valuable production time. Accordingly, the clearance between the blade and the tower is a constraint taken into consideration during the design phase of the wind turbine in order to prevent or reduce the likelihood of a potential tower strike during operation of the wind turbine.

One approach for maintaining an acceptable clearance between the blade and the tower during operation, under perhaps unexpected and harsh conditions, is to limit or reduce the amount of blade deflection under aerodynamic load. This may be achieved, for example, by generally making the blades stiffer. In a conventional approach, wind turbine blades are typically made stiffer by simply adding more material during the manufacture of the wind turbine blade (e.g., adding more fibre material and resin in the manufacture of the blade). This approach, however, has a number of drawbacks. For example, as one might imagine, the amount of material to make an 80 meter cantilevered blade sufficiently stiff under aerodynamic load is not insignificant. Thus, the material costs for manufacturing sufficiently stiff wind turbine blades are relatively high. Additionally, the added material increases the overall weight of the wind turbine blade, which not only potentially negatively impacts its aerodynamic performance, but also makes storage, transportation, and assembly of the wind turbine blade more expensive and complex.

Another approach used to achieve increased clearance between the tower and the blade during operation is to use a pre-bend in the wind turbine blade. Pre-bent wind turbine blades are generally known, such as from EP1019631. The broad concept of the pre-bent blade is to move away from an overly stiff blade design and allow for a certain amount of flexibility or deflection in the blade under load. By specifically designing some level of flexibility into the blade, the blade may be less stiff, and consequently the amount of material used in making the blade and its associated weight may be significantly reduced. Furthermore, to address the issue of clearance between the blade and tower, the blade may be designed with a pre-bend such that in its natural, non-operative state (undeflected shape), the blade curves or bends in the upwind direction away from the tower (referred to as a flapwise pre-bend). However, during aerodynamic loading of the pre-bent blade during normal operation of the wind turbine, the blade defects in the downwind direction but maintains an increased clearance from the tower as compared to an aerodynamically-loaded straight wind turbine blade having a similar design and similar loading. Thus, by use of a flapwise pre-bend, longer and lighter-weight wind turbine blades may be used without increasing the risk of a tower strike.

While pre-bent wind turbine blades have generally been successful for their intended purpose, there are some drawbacks of using pre-bent blades currently available in the wind turbine industry. For example, it is known that pre-bent wind turbine blades are subject to relatively large, oscillating moment loads about their rotational axes during operation of the wind turbine. As a result, the pitch systems associated with pre-bent wind turbine blades, which control rotational movements of the blades about their rotational or pitch axes, must resist and work against the large moment loads in order to optimize operation and maintain control of the wind turbine. This, in turn, increases the wear and fatigue in the pitch system, including the pitch bearing and the pitch motors used to rotate the blades, potentially leading to premature wear and failure of the blade pitch systems. When the pitch system of a blade fails, the wind turbine must be taken out of operation until it can be repaired. Similar to the above, these repair procedures are expensive and may result in the wind turbine being inoperable and off-line for a period of time, costing the wind turbine owner production time.

Accordingly, there is a need in the wind turbine industry for an improved pre-bent wind turbine blade that can, not only achieve its purpose regarding reduced likelihood of tower strikes, but also reduce the moment loads acting on the blade pitch system during normal operation to reduce wear and possible failures, and avoid the costly operations associated with repairing, replacing, and/or maintaining the blade pitch system.

WO2018/215037 describes a wind turbine blade with a pre-bend for a downwind wind turbine. US2021/222668 describes a split wind turbine blade with a pre-bend distribution. EP2404743 describes a method of producing a pre-bent wind turbine blade.

### Summary

In a first aspect of the invention, there is a provided a horizontal axis wind turbine according to claim 1.

The first inflection point in the blade centre line axis may be located in the inner half of the blade length. For example, the first inflection point in the blade centre line axis may be located between about 20% and about 40% of the blade length. Preferably the first inflection point in the blade centre line axis may be located between about 25% and about 35% of the blade length.

The second inflection point in the blade centre line axis may be located in the outer half of the blade length. For example, the second inflection point in the blade centre line axis may be located between about 55% and about 75% of the blade length. Preferably the second inflection point in the blade centre line axis may be located between about 60% and about 70% of the blade length.

Preferably the blade centre line axis does not cross a hypothetical straight line drawn between the root end and the tip end.

Preferably the pre-bend defined by the blade centre line axis increases monotonically from the root end to the tip end, preferably strictly monotonically from the root end to the tip end. This means that the magnitude of pre-bend increases moving from the root end to the tip end.

When the rotor faces the oncoming wind, such as by yawing the nacelle relative to the tower, and the blade is oriented in its operative position (i.e., the pitch orientation of the blade when the wind turbine is operative at, for example, a rated wind speed), the blade defines an upwind side and a downwind side.

The wind turbine is a horizontal axis upwind turbine, i.e. the rotor is upwind of the tower.

The rated wind speed is the wind speed at which the wind turbine reaches its rated power. The rated power of a wind turbine is defined in IEC 61400 as the maximum continuous electrical power output which a wind turbine is designed to achieve under normal operating and external conditions. Large commercial wind turbines are generally designed for a lifetime of 20 to 30 years and their rated power output takes into account that lifespan.

The blade centre line axis may include a first portion between the root end and the first inflection point having a centre of curvature on the upwind side of the blade, a second portion between the first inflection point and the second inflection point having a centre of curvature on the downwind side of the blade, and a third portion between the second inflection point and the tip end having a centre of curvature back on the upwind side of the blade. Moreover, the wind turbine blade includes a centre of gravity. When the wind turbine blade is in its operative but aerodynamically unloaded state, the centre of gravity of the blade may be spaced from the pitch axis and located on the upwind side of the blade. However, when the blade is in its operative and aerodynamically loaded state, the centre of gravity of the blade may be spaced from the pitch axis and located on the downwind side of the blade. Preferably the tip end of the blade points in an upwind direction away from the tower.

When the wind turbine blade is in its operative but aerodynamically unloaded state, this means that the blade is mounted on the turbine but it is not subjected to oncoming wind.

Preferably the blade centre line axis does not cross a hypothetical straight line drawn between the root end and the tip end when the wind turbine blade is in its operative but aerodynamically unloaded state.

In a second aspect of the invention, there is provided a method of making a wind turbine according to claim 15.

The moulding of the outer shell of the blade may be performed in a one-step moulding process (e.g., the outer shell is formed as an integrated body) or a two-step moulding process. For example, moulding the outer shell of the blade may be a two-step process and include moulding a first shell half in the first mould cavity, moulding a second shell half in the second mould cavity, arranging the first mould half and the second mould half one over top the other, and coupling the first shell half to the second shell half to form the outer shell of the wind turbine blade.

The first mould cavity and the second mould cavity according to the method may be contoured such that the first inflection point in the blade centre line axis is located in the inner half of the blade length. For example, the first inflection point in the blade centre line axis may be located between about 20% and about 40% of the blade length. The second inflection point in the blade centre line axis may be located in the outer half of the blade length. For example, the second inflection point in the blade centre line axis may be located between about 55% and about 75% of the blade length.

The first mould cavity and the second mould cavity according to the method may be contoured such that when the blade is oriented in its operative and aerodynamically unloaded position, the blade centre line axis has a first portion between the root end and the first inflection point having a centre of curvature on the upwind side of the blade, a second portion between the first inflection point and the second inflection point having a centre of curvature on the downwind side of the blade, and a third portion between the second inflection point and the tip end having a centre of curvature back on the upwind side of the blade.

In a third aspect of the invention, there is provided a mould assembly for making a wind turbine blade according to claim 21.

The first mould half may be configured for forming a first blade shell in the first mould cavity and the second mould half may be configured for forming a second blade shell in the second mould cavity separately from the moulding of the first blade shell. Moreover, the first mould half and the second mould half are arrangeable one over top the other to connect the first blade shell and the second blade shell to form the outer shell of the blade.

It will be appreciated that preferred and/or optional features of each aspect of the invention may be combined with the other aspects of the invention.

### Brief Description of the Drawings

The accompanying drawings, which are incorporated in and constitute a part of this specification, illustrate embodiments of the invention and, together with a general description of the invention given above, and the detailed description given below, serve to explain the invention.
Fig. 1 is a perspective view of a wind turbine having pre-bent wind turbine blades in accordance with an embodiment of the invention;
Figs. 2 and 3 are front and tip end schematic views of a convention pre-bent wind turbine blade demonstrating a first moment acting on the blade pitch system;
Figs. 4 and 5 are top and tip end schematic views of the convention pre-bent wind turbine blade demonstrating a second moment acting on the blade pitch system;
Figs. 6 and 7 are two views of a wind turbine blade having a pre-bend in accordance with an embodiment of the invention;
Fig. 8 is a graph illustrating the blade centre line axis of the conventional pre-bent blade and the inventive pre-bent blade when in an aerodynamically unloaded state;
Fig. 9 is a graph illustrating the blade centre line axis of the conventional pre-bent blade and the inventive pre-bent blade in an aerodynamic loaded state;
Fig. 10 is a graph illustrating the curvature of the blade centre line axis of a conventional pre-bent blade and the inventive pre-bent blade when in an aerodynamically unloaded state;
Fig. 11 is a graph illustrating the blade centre line axis of the inventive pre-bent blade when in an aerodynamic loaded state and illustrating two inflection points along the curve; and
Fig. 12 is a schematic illustration of a mould assembly for making a wind turbine blade having the inventive pre-bend configuration in accordance with an embodiment of the invention.

### Detailed Description

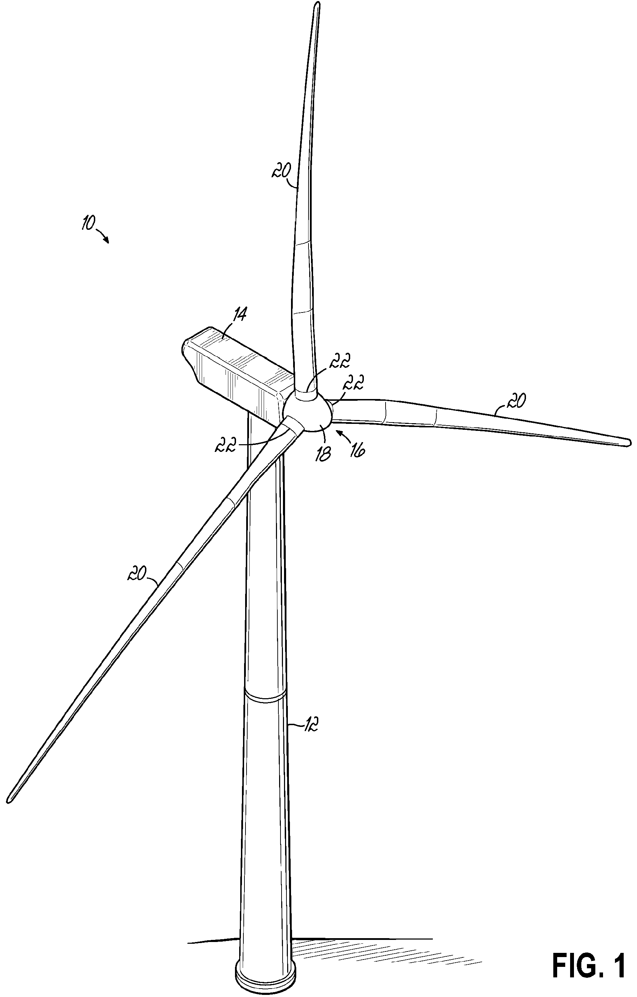

Referring to Fig. 1, a wind turbine 10 includes a tower 12, a nacelle 14 disposed at the apex of the tower 12, a rotor 16 operatively coupled to a generator (not shown) housed inside the nacelle, and a gearbox (not shown) also housed inside the nacelle 14. In addition to the generator and gearbox, the nacelle 14 may house various components needed to convert wind energy into electrical energy and to operate and optimize the performance of the wind turbine 10. The tower 12 supports the load presented by the nacelle 14, rotor 16, and other wind turbine components housed inside the nacelle 14 and operates to elevate the nacelle 14 and rotor 16 to a height above ground level or sea level, as may be the case, at which air currents having lower turbulence and higher velocity are typically found.

The rotor 16 may include a central hub 18 and a plurality of blades 20 attached to the central hub 18 at locations distributed about the circumference of the central hub 18. In the representative embodiment, the rotor 16 includes three blades 20, however the number may vary. The blades 20, which project radially outward from the central hub 18, are configured to interact with passing air currents to produce rotational forces that cause the central hub 18 to spin about its longitudinal axis.

The rotor 16 may be coupled to the gearbox directly or indirectly via a drive shaft (not shown). Either way, the gearbox transfers the rotation of the rotor 16 through a coupling (not shown) to the generator. Wind exceeding a minimum speed may activate the rotor 16, causing the rotor 16 to rotate in a direction substantially perpendicular to the wind, applying torque to the input shaft of the generator. The electrical power produced by the generator may be supplied to a power grid (not shown) or an energy storage system (not shown) for later release to the grid as understood by a person having ordinary skill in the art. In this way, the kinetic energy of the wind may be harnessed by the wind turbine 10 for power generation.

The blades 20 of the wind turbine 10 are of the type that includes a pre-bend, and more particularly a flapwise pre-bend, in order to increase the distance between the blades 20 (e.g., the tips thereof) and the tower 12 during operation of the wind turbine 10. Moreover, each of the blades 20 includes a pitch system 22 (Fig. 1) at the connection between the blades 20 and the central hub 18. As is generally known in the wind turbine industry, the pitch system 22 allows the blades 20 to rotate about a pitch axis of the blade 20 to change the orientation of the blade 20 relative to the oncoming wind. Although not shown, the pitch system 22 generally includes a pitch bearing having an inner race coupled to the hub 18 or the blade 20, an outer race coupled to the other of the hub 18 and the blade 20, and a plurality of bearing elements (e.g., rollers or the like) disposed between the two races to provide relative movement therebetween. The pitch system 22 further includes one or more pitch motors and suitable gearing (e.g., ring gear) such that when the pitch motors are actuated, the blade 20 rotates about its pitch axis relative to the central hub 18. As noted above, the pitch system of conventional pre-bent wind turbine blades is subject to large, oscillating moment loads during normal operation of the wind turbine. Aspects of the present invention are directed to reducing these large, oscillating moment loads on blade pitch systems to extend the working life of its components and reduce repair, replacement, and/or maintenance activities and costs associated with the blade pitch systems.

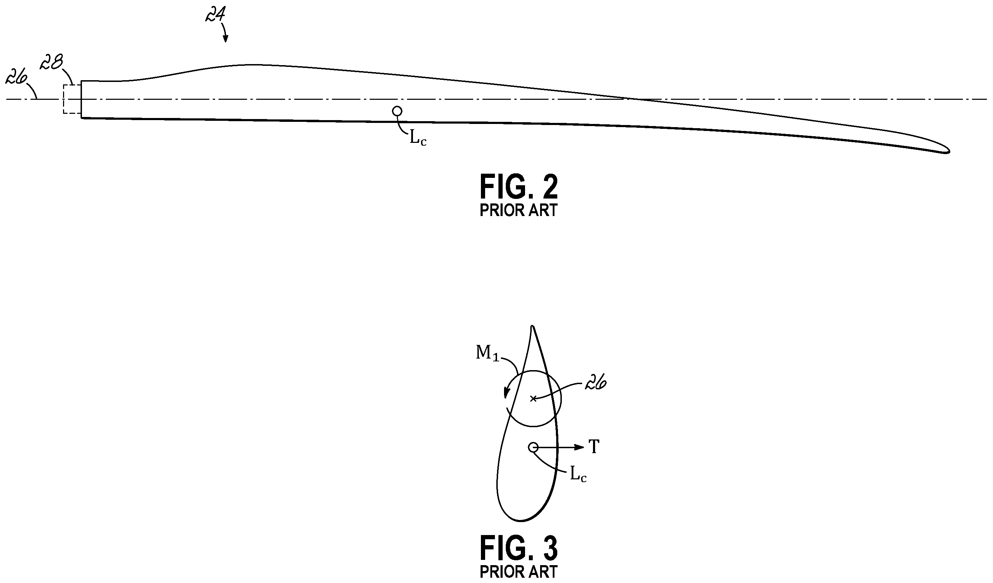

To appreciate certain aspects of the present invention, a better understanding of the dynamic loading of a pre-bent wind turbine blade is believed to be instructive. Fig. 2 illustrates a conventional pre-bent wind turbine blade 24 from, for example, a front view (i.e., from the wind direction) when the blade 24 is at the three o'clock position on the wind turbine 10. The blade 24 has a pitch axis 26 about which the blade 24 rotates when the pitch system 28 is actuated. Gravity is acting on the flexible, cantilevered blade and at different locations through a full rotation, the blade 24 deflects downwardly under the influence of gravity, as illustrated in Fig. 2. These deflections are referred to as gravity-induced edgewise deflections. The resultant aerodynamic thrust load T acts on the blade 24 at the lift centre L_{c} as indicated in the figure. When the blade is at the three o'clock position as illustrated, the lift centre Lc on the blade is deflected downwards so that it is below the pitch axis 26.

As best illustrated in Fig. 3, which illustrates a schematic cross section view of the blade 24 through the lift centre and looking from the tip towards the root, the location of the lift centre L_{c} is generally below the pitch axis 26 such that a portion of the thrust load T on the blade 24 produces a moment M₁ about the pitch axis 26. As illustrated in this figure, the moment M₁ is in the counterclockwise direction and is due to the thrust load in combination with the edgewise deflection of the blade 24.

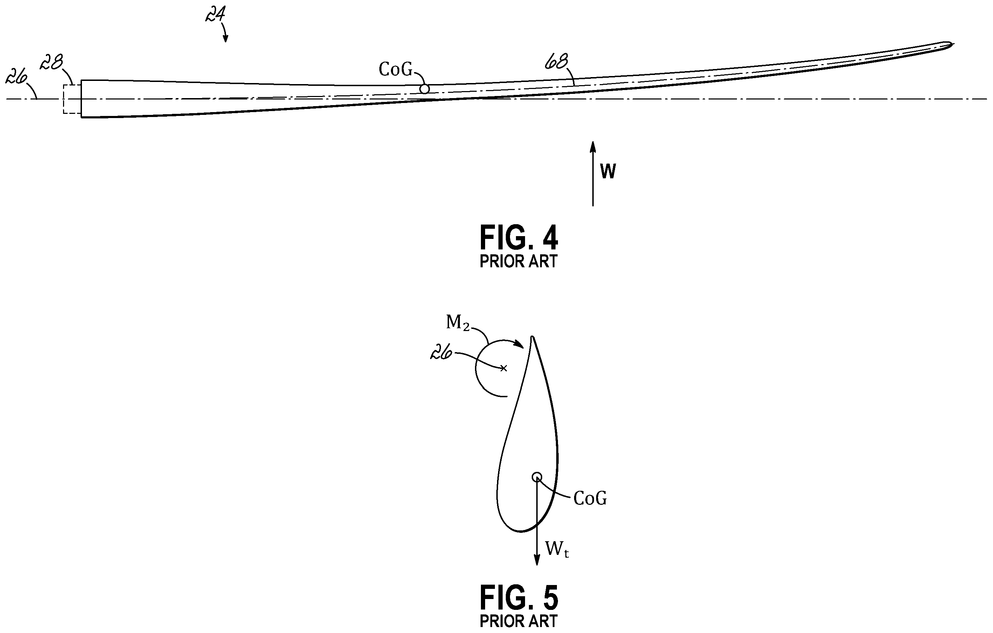

Fig. 4 illustrates the conventional pre-bent wind turbine blade 24 from, for example, a top view (looking down on the trailing edge) when the blade 24 is at the three o'clock position on the wind turbine 10. During operation of the wind turbine, the blade 24 is deflected in the downwind direction under aerodynamic load. The blade 24 has a centre of gravity CoG at which the weight Wₜ of the blade 24 acts. As shown in Fig. 5, which illustrates a schematic cross section view of the blade 24 through the centre of gravity, looking from the tip towards the root, similar to Fig. 3, the location of the centre of gravity CoG is generally behind (e.g., downwind) of the pitch axis 26 such that the weight Wₜ on the blade 24 acting on the centre of gravity CoG produces a moment M₂ about the pitch axis 26. As illustrated in this figure, the moment M₂ is in the clockwise direction and is due to the weight Wₜ of the blade in combination with the flapwise deflection (due to the aerodynamic loads) of the blade 24 during operation of the wind turbine.

Thus, during operation of the wind turbine, the two moments M₁ and M₂ work against each other. Conceptually, it is then possible to use the two moments M₁, M₂ against each other to cancel the moment load on the blade pitch system. However, large, modern wind turbine blades are much more flexible in the flapwise direction than in the edgewise direction. Thus, the moment M₂ is usually always much larger than M₁ (i.e., M₂>>M₁). In order to bring these two moments M₁, M₂ more into balance, and provide a more significant cancellation effect, there are a number of options. For example, one option is to restrict the amount of edgewise or flapwise deflections experienced by the blade under load. As noted above, this approach can be a very expensive solution to reduce the moment loads on the pitch system and may give rise to other challenges as well. However, a much more feasible and economical solution is provided by the invention by manipulating the location of the centre of gravity CoG of the blade during normal operation of the wind turbine (i.e., when the blade is under aerodynamic loading and subject to flapwise deflections) to thereby reduce the M₂ moment. Reducing the M₂ moment relative to the M₁ moment provides a greater cancellation effect and a reduced moment load on the blade pitch system.

Altering the location of the centre of gravity CoG may be achieved by altering the configuration of the pre-bend in the wind turbine blade. This is an interesting concept in the context of pre-bent wind turbine blades. In this regard, designers of pre-bent blades have primarily, if not exclusively, focused on the configuration of the outboard or tip region of the wind turbine blade. This makes perfect sense since the goal of pre-bent blades is to move the tip of the blade further away from the tower during operation of the wind turbine (when the blade is deflected in the wind direction) in order to reduce the likelihood of tower strikes. Very little attention has typically been given to the configuration of the blade along the inboard or root region of the wind turbine blade. This has significance in the present context because it is known that blade designs call for more substantive structures nearer the root end of the blade than the tip end of the blade. Thus, for example, the root region of wind turbine blades is generally very thick and heavy as compared to the tip region of the blades. Due to the distribution of materials that make up the blade (e.g., fibres, resin, inserts, etc.), the centre of gravity CoG of the blade is typically located more toward the root end of the blade, as generally demonstrated in Fig. 4.

By manipulating the configuration of the pre-bend in the root region of the blade, the location of the centre of gravity CoG may be altered in a manner that reduces the M₂ moment, resulting in reduced moment loads acting on the blade pitch system during wind turbine operation. More particularly, configuring the pre-bend to move the centre of gravity CoG forward in an operative but unloaded configuration, e.g., in the upwind direction from a top view perspective similar to that shown in Fig. 4, when the blade is subjected to load, the centre of gravity CoG does not move as far in the downstream direction relative to the pitch axis of the blade. In other words, when the blade is deflected in the flapwise direction during operation, the moment arm (as measured from the pitch axis) of the weight load acting at the centre of gravity CoG is reduced, thereby reducing the M₂ moment.

While manipulating the configuration of the pre-bend in the root region of the blade to alter the location of the centre of gravity CoG may provide certain advantages in regard to the moments acting on the blade pitch system, care must be taken regarding the pre-bend configuration in the tip region of the blade. More particularly, the absolute pre-bend in the blade, which is defined to be the distance between the pitch axis and the blade at its tip when the blade is in an aerodynamically unloaded state, is typically selected such that during normal operation of the wind turbine (and the blade is deflected in the flapwise direction), a minimum clearance distance is met between the blade tip and the wind turbine tower. By way of example, current pre-bent blades (having a length of 80 meters for example) may have an absolute pre-bend at the blade tip of between about 2 m and about 4 m so that there is sufficient clearance between the blade tip and the tower during operation. Because providing a pre-bend in a blade can present manufacturing and transport challenges, providing excess absolute pre-bend in a blade that provides excess clearance between the blade tip and the tower during normal operation is generally avoided.

In addition to the above, pre-bent wind turbine blades can exhibit instability at the blade tip under dynamic loading. The instability typically manifests itself as uncontrolled, dynamically complex whirling action near the blade tip which results in diminished aerodynamic performance and reduced fatigue life of the blade. It is believed that the primary cause of the instability lies with the bend-twist coupling associated with the pre-bent blades. Current pre-bent blades address this instability by controlling the rate of change of the pre-bend (e.g., the slope of the pre-bend) in the near region of the blade tip. Thus, while there is a desire to manipulate the pre-bend configuration in the root region of the blade for the purpose of improving moment loads on the pitch system, there is no desire to manipulate the pre-bend configuration in the tip region of the blade, which adequately addresses the bend-twist instability that pre-bend blades are susceptible to.

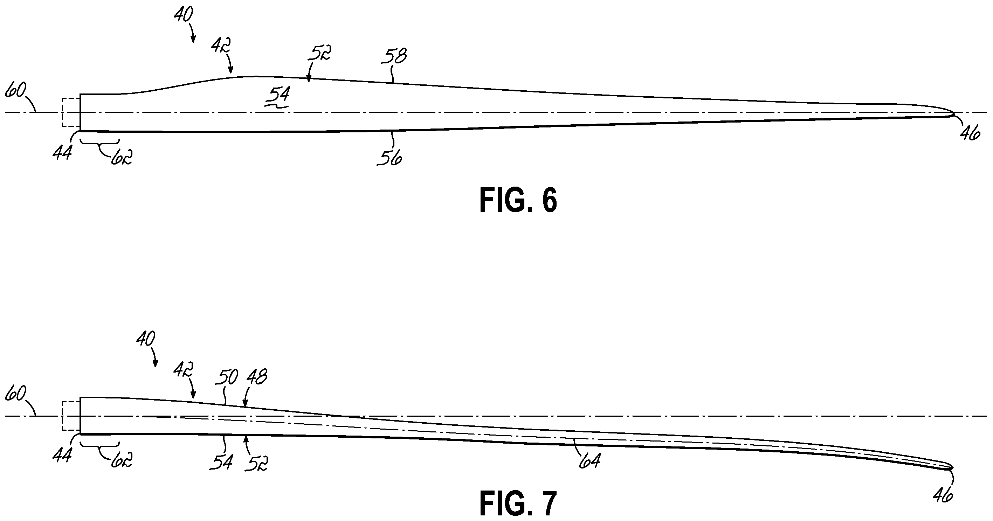

Figs. 6 and 7 illustrate a pre-bent wind turbine blade 40 in accordance with an embodiment of the invention configured to be used on the wind turbine 10 shown in Fig. 1. The blade 40 is configured as an elongate structure or body having an outer airfoil shell 42 and an inner spar (not shown) including spar caps and one or more shear webs that provide structural support to the blade 40. The elongate blade 40 includes a root end 44 which is configured to be coupled to the central hub 18 when mounted to rotor 16, and a tip end 46 longitudinally opposite to root end 44. In the orientation shown in Figs. 6 and 7, the outer shell 42 may include a first, lower shell half 48 that defines the suction surface 50 of the blade 40, and a second, upper shell half 52 that defines the pressure surface 54 of the blade 40. The lower and upper shell halves 38, 42 are coupled together along a leading edge 56 and a trailing edge 58 located opposite one another across a chord of the blade 40.

The blade 40 is configured to rotate about a pitch axis 60 under the influence of a blade pitch system (not shown). A section 62 of the blade 40 immediately adjacent the root end 44 may be generally cylindrical in shape in order to connect to the (circular) pitch bearing of the pitch system by which the blade 40 is attached to the hub 18. The centre axis of this cylindrical section 62 is generally co-axial with the pitch axis 60 of the blade 40. The cylindrical section 62 longitudinally extends along a relatively short distance and is configured to accommodate inserts (not shown) at the root end 44 of the blade 40 for receiving stud bolts that physically connect the blade 40 to the pitch bearing of the pitch system, as is generally known.

The blade 40 also defines a blade centre line axis 64. The concept of a blade centre line axis 64 is well known in the wind turbine industry and is generally defined by the collection of points being located midway between the suction and pressure surfaces 50, 54 and at a chordwise location defined by the maximum blade thickness. The blade centre line axis may also be referred to as the blade twist axis. The blade centre line axis 64 is defined by the main body of the blade 40 and does not generally include various add-on elements, such as blade extenders, winglets, or other items attached to the blade 40. The blade centre line axis 64 characterizes several features of the blade 40, such as the pre-bend configuration, the overall shape of the blade 40, the position of the blade 40 in an unloaded and loaded state relative to the pitch axis 60, etc. This is perhaps best illustrated in Fig. 7. Accordingly, details of the blade 40 (e.g., shape, pre-bend, moments, etc.) will be described below with reference to certain features in the blade centre line axis 64 alone or in combination with the pitch axis 60 of the blade 40.

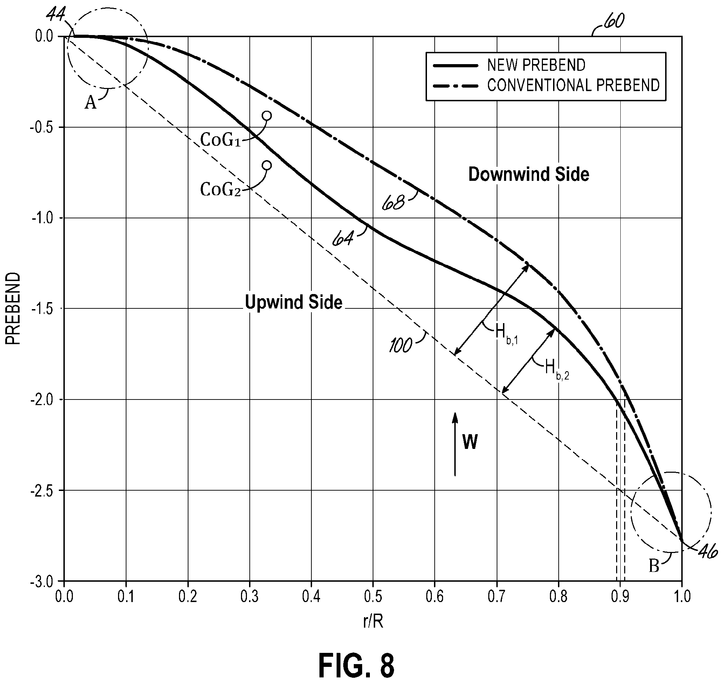

Fig. 8 is a plot illustrating the blade centre line axis 64 of blade 40 in accordance with an embodiment of the invention as compared to the blade centre line axis 68 of a conventional pre-bent wind turbine blade 24. The perspective illustrated in Fig. 8 corresponds to a top view of the blades 24, 40 in the three o'clock position and being aerodynamically unloaded, which provides a clear indication of the (flapwise) pre-bend configurations of the blades 24, 40. In the plot, the abscissa is a radial dimension of the blades 24, 40 (e.g., from a perspective of being on the rotor 16), with zero being adjacent the root ends of the blades, and is scaled by the length of the blades R. The ordinate in the plot is the pre-bend of the blades 24, 40 in meters. The abscissa essentially represents the pitch axes of the blades 24, 40 and are generally co-linear.

Fig. 8 demonstrates a number of features of the pre-bent blade 40 relative to the conventional pre-bent blade 24. Turning first to the root region of the blades 24, 40 in circle A, the pre-bend in blade 40 is initiated earlier (e.g., closer to the root end 44) compared to the conventional blade 24 and at a rate (e.g., slope) higher than that of the conventional blade 24. The effect of this is that it moves more of the heavy portion of the blade 40 in the root section in the upwind direction (from the perspective shown in Fig. 8) and away from the pitch axis 60. The centre of gravity CoG₁ of blade 24 and the centre of gravity CoG₂ of blade 40 are both illustrated in the figure. Because more mass has been shifted in the upwind direction, the centre of gravity of blade 40 has correspondingly been shifted in the upwind direction. The relevance of this will be explained in more detail below.

Turning to the tip region of the blades 24, 40 in circle B of Fig. 8, the absolute pre-bend at the tip of the blades 24, 40 may be kept generally the same between the two blades 24, 40. As was described above, by substantially maintaining the pre-bend configuration near the tip of the blades 24, 40, it is believed that the blade 40 will have a performance similar to that of blade 24 as it relates to bend-twist instabilities at the tip of the blade 40. Thus, the pre-bend in blade 40, as provided by the blade centre line axis 64 demonstrates an approach where the pre-bend is manipulated in the root region of the blade 40 while maintaining the pre-bend configuration near the tip region of the blade 40.

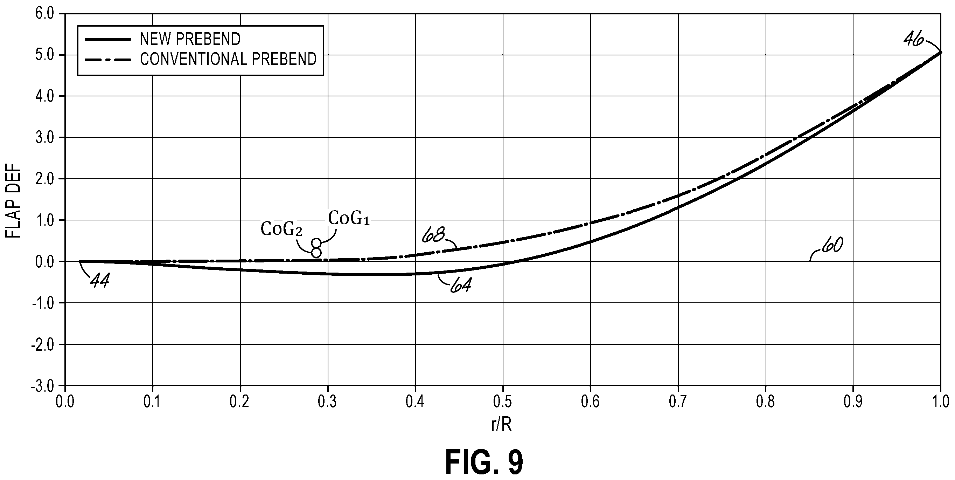

Fig. 9 is a plot illustrating the blade centre line axis 64 of blade 40 as compared to the blade centre line axis 68 of the conventional pre-bent wind turbine blade 24 under aerodynamic loading during normal operation of the wind turbine 10 (e.g., at rated wind speed). In an aerodynamically unloaded state, and as illustrated in Fig. 8, the centre of gravity CoG₁ of blade 24 and the centre of gravity CoG₂ of blade 40 are both on an upwind side of the blade and spaced from the pitch axes of the blades 24, 40. As demonstrated in this figure, however, under aerodynamic loading, the blades 24, 40 deflect in the flapwise direction as anticipated. This moves a fairly significant portion of the blade mass in the downwind direction (from the perspective shown in Fig. 8) and across the pitch axes of the blades 24, 40. The centre of gravity CoG₁ of blade 24 and the centre of gravity CoG₂ of blade 40 are both illustrated in the figure in the aerodynamically loaded state on the downwind side of the blades 24, 40. While both centre of gravities CoG₁ and CoG₂ have moved to the other side of the pitch axis 60, the relevant feature is that the centre of gravity CoG₂ of blade 40 is not as severely deflected in the flapwise direction as compared to the centre of gravity CoG₁ of blade 24. Accordingly, the distance between the pitch axis 60 and the centre of gravity CoG₂ of blade 40 (i.e., the moment arm for the moment M₂ on the pitch system resulting from the weight of the blade 40) is reduced compared to the moment M₂ on the pitch system resulting from the weight of blade 24. Thus, when the wind turbine blade is in its operative but aerodynamically unloaded state, the centre of gravity CoG₂ of the blade 40 is spaced from the pitch axis 60 and located on the upwind side of the blade 40. However, when the blade 40 is in its operative and aerodynamically loaded state, the centre of gravity CoG₂ of the blade 40 is spaced from the pitch axis 60 and located on the downwind side of the blade 40.

Advantageously, the blade centre line axis 64 does not cross a hypothetical straight line 100 drawn between the root end 44 and the tip end 46 of the blade. This prevents the centre of gravity CoG₂ of the blade 40 from being too far upwind of the pitch axis when the blade is in its operative but aerodynamically unloaded state, so that the moment arm acting on the pitch system is not too great if the blade is to be pitched when in the aerodynamically unloaded state, or even under low wind conditions.

Thus, the pre-bent wind turbine blade 40 as described above provides: i) a reduction in the moment loads acting on the blade pitch system as compared to conventional pre-bent blades; and ii) maintains good aerodynamic stability in the tip region of the blade. The former feature results in a wind turbine blade pitch system that has fewer failures and maintenance needs, as well as an extended working life, in particular due to lower fatigue loading. Thus, costs associated with repair, replacement, and maintenance operations on the blade pitch system are reduced. The latter feature results in stable and efficient operation of the blade 40 over a wide range of wind speeds, and further avoids any blade damage resulting from aerodynamic instabilities due to the bend-twist coupling.

Achieving these two outcomes by manipulation of the pre-bend configuration provides a unique blade geometry. In an exemplary embodiment, the blade 40 includes a pre-bend such that when the blade 40 is mounted onto the wind turbine 10 and oriented in a normal, operative position (but aerodynamically unloaded) and viewed from the top, the blade 40 is configured to curve or bend in the upwind direction, similar to standard pre-bent blades. Accordingly, the tip end 46 of the blade 40 is positioned more upwind than the root end 44 of the blade 40. However, the configuration of the pre-bend in blade 40 differs from that of the standard pre-bent blade, such as blade 24.

More particularly, and in accordance with an aspect of the invention, the blade 40 is pre-bent so as to have a "double S" configuration generally characterized by a pair of inflection points I₁ and I₂ located along the length of the blade 40 between the root end 44 and the tip end 46. As used herein, an inflection point I refers to a location along the blade 40 at which the curvature, as defined by the second derivative of the curve that defines the blade centre line axis 64 of the blade 40, is zero. When the inflection point I occurs at an interior portion of the blade 40 (i.e., not at the root end 44 or the tip end 46), then the curvature changes sign across the inflection point (i.e., goes from negative to positive or vice versa depending on how the curvature is defined).

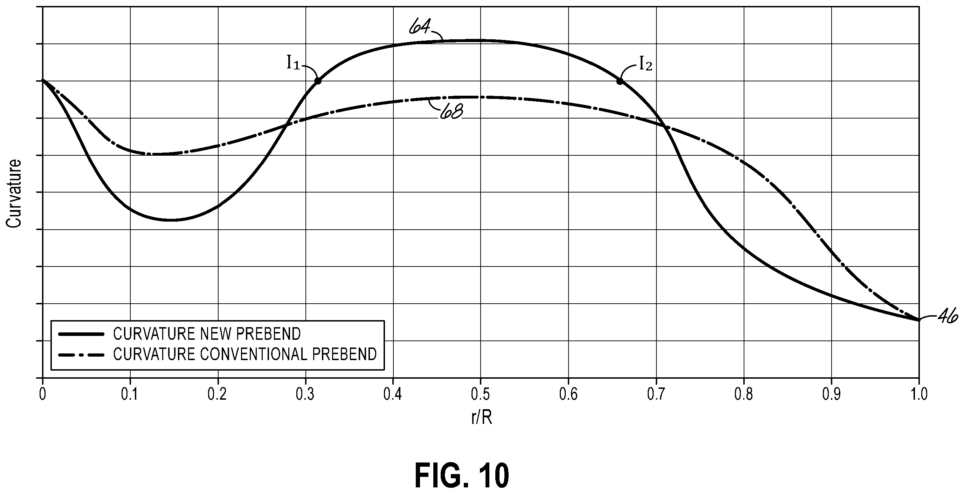

Fig. 10 is a plot illustrating the curvature the blade centre line axis 64 of blade 40 as compared to the blade centre line axis 68 of the conventional pre-bent wind turbine blade 24 from the perspective when the blades 24, 40 are mounted onto the wind turbine 10 and oriented in a normal, operative position (but aerodynamically unloaded) and viewed from the top. As demonstrated in this figure, standard pre-bend blades 24 vary in curvature but do not include an inflection point along the length of the blades. In contrast to this, however, the blade 40 includes a pair of inflection points I₁, I₂ at interior portions of the blade 40 where the curvature changes sign. In an exemplary embodiment, the first inflection point I₁ may be located in the inner half of the blade 40, i.e., between the root end 44 and the midpoint of the blade 40 (50% of blade length R), and the second inflection point I₂ may be located in the outer half of the blade 40, i.e., between the midpoint and the tip end 46 of the blade 40. In a preferred embodiment, the first inflection point I₁ may be located between about 20% and about 40% of the blade length R. In an even more preferred embodiment, the first inflection point I₁ may be located between about 25% and about 35% of the blade length R. In a similar manner, in a preferred embodiment, the second inflection pint I₂ may be located between about 55% and about 75% of the blade length R. In an even more preferred embodiment, the first inflection point I₂ may be located between about 60% and about 70% of the blade length R.

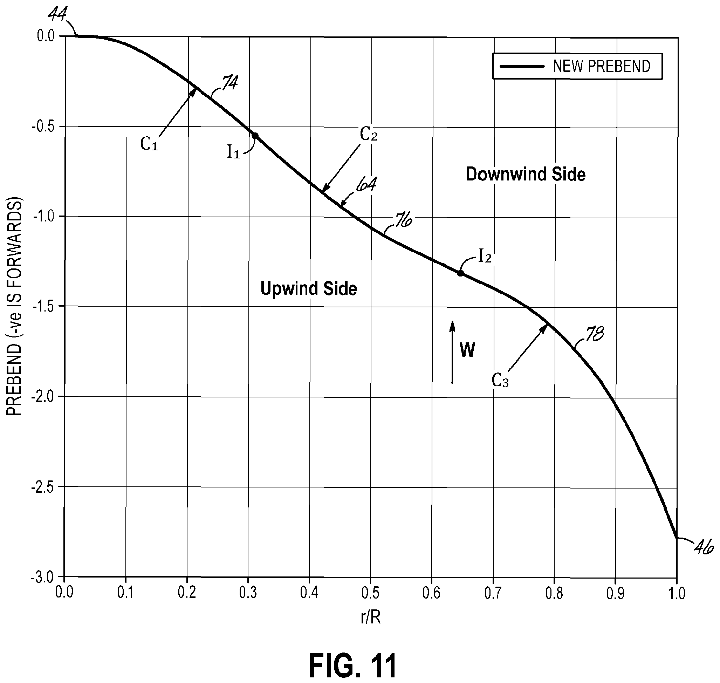

In the reference frame of Fig. 11, i.e., from the perspective when the blade 40 is mounted onto the wind turbine 10 and oriented in a normal, operative position (but aerodynamically unloaded) facing the oncoming wind and viewed from the top, along a first portion 74 of the blade 40 from the root end 44 to the first inflection point I₁, the curvature of the blade may be designated as negative. By this designation, the first portion 74 of the blade 40 may have a centre of curvature C₁ on the upwind side of the blade 40 to give that portion 74 of the blade 40 a concave configuration. Along a second portion 76 of the blade 40 from the first inflection point I₁ to the second inflection point I₂, the curvature of the blade may be designated as positive. By this designation, the second portion 76 of the blade 40 may have a centre of curvature C₂ on the downwind side of the blade 40 to give that portion 76 of the blade 40 a convex configuration. Along a third portion 78 of the blade 40 from the second inflection point I₂ to the tip end 46, the curvature of the blade may be designed as negative. By this designation, the third portion 78 of the blade 40 may have a centre of curvature C₃ back on the upwind side of the blade 40 to give that portion 78 of the blade a concave configuration.

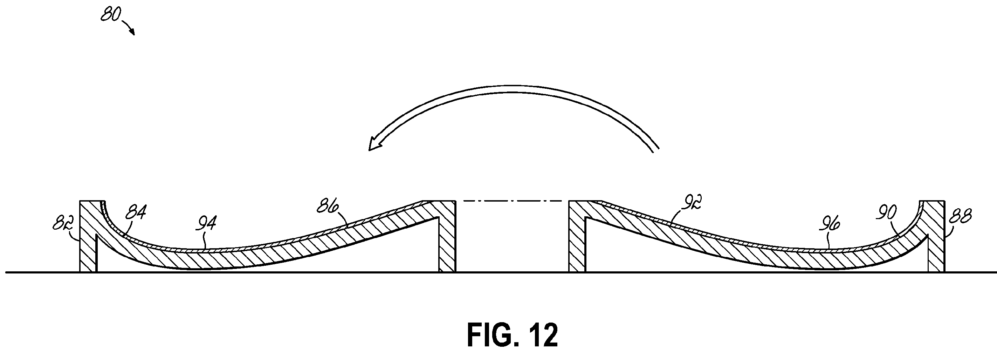

The wind turbine blade 40 may be formed through a moulding process, as is generally known in the art. Fig 12 illustrates a moulding assembly 80 for forming the wind turbine blade 40 described above. The moulding assembly 80 includes a lower mould half 82 having a lower mould cavity 84 that defines a contoured surface 86. The moulding assembly 80 further includes an upper mould half 88 having an upper mould cavity 90 that defines a contoured surface 92. As is known in the wind turbine industry, fibre materials, resin, and possibly foam cores or the like, may be introduced into the cavities 84, 90 of the lower and upper mould halves 82, 88 and cured to form a lower blade shell 94 and an upper blade shell 96. The lower and upper blade shells 94, 96 may then be coupled to each other, such as by overturning the upper mould half 88 to be positioned overtop the lower mould half 82, and the blade shells 94, 96, as well as any spar structures disposed therebetween, bonded to each other. The blade shells 94, 96 form the outer shell 42 of the wind turbine blade 40. The contoured surfaces 86, 92 of the mould cavities 84, 90 are configured to define a blade pre-bend configuration (as defined by a blade centre line axis 68) having the characteristics as shown and described above.

While a two-step moulding process is described in Fig. 12, the invention is not limited to any particular type of moulding process. For example, a one-step moulding process may be used to mould an integrated outer shell 42 of the wind turbine blade 40. In this embodiment, two mould halves may be used in conjunction with one or more removable inserts (not shown) to provide a moulding assembly that forms the lower and upper blade shells 94, 96 together in a single moulding step. Other variations of the moulding process may also be implemented but remain within the scope of the present invention. In these various alternative moulding processes, it is the contoured surfaces 86, 92 of the mould cavities 84, 90 of the mould halves 82, 88 that ultimately defines the shape of the blade and the blade centre line axis 64.

From a manufacturing standpoint, a blade having the double S configuration may provide certain advantages over the standard pre-bent wind turbine blade. In this regard, the lower mould half 82 and the upper mould half 88 must have a height that accommodates the bowing height of the respective mould cavities 84, 90. A pre-bend increases the bowing height of the mould cavities 84, 90, and thus increases the overall height of the mould halves 82, 88. As best illustrated in Fig. 8, the bowing height H_{b} of the mould cavities 84, 90 is the perpendicular distance from the line 100 that connects the root end and the tip end of the mould cavities 84, 90 to the furthest point of the mould cavities 84, 90. As illustrated in Fig. 8, the bowing height H_{b,1} of the standard pre-bent blade is generally greater than the bowing height H_{b,2} of the blade 40 having the double S configuration according to the present invention. Accordingly, the mould halves 82, 88 for the blade 40 having the double S configuration have a reduced height compared to those of the conventional pre-bent wind turbine blade. This results in an overall reduction in the footprint of the moulding assembly 80 on the factory floor, which may be at a premium. Additionally, the ceiling height of the facility, walkways, and other equipment for moulding the blades may all exist at reduced heights, which may provide additional benefits.

The pre-bend defined by the blade centre line axis increases monotonically from the root end to the tip end, preferably strictly monotonically from the root end to the tip end. As can be seen in Figures 8, 9 and 11, the convention for pre-bend is to measure it negatively in front of the tower, i.e. upwind. When the pre-bend increases monotonically it is the absolute or the magnitude that is increasing, that is when moving along the blade from the root end to the tip end, the blade is moving further away from the tower. In other words, the blade does not bend backwards at any point and this means that the bowing height H_{b,2} can be kept to a minimum (in comparison to the bowing height of a blade that deflects backwards toward the tower).

In addition, the reduced bowing height H_{b,2} of the blade 40 makes it easier to transport the blade, as the blade has a smaller "footprint" when mounted on a transport vehicle. This is particularly the case for transport of the blade by rail. The blade 40 may be mounted across two rail cars in a known manner, and due to the smaller footprint of the blade there will be a smaller overhang between the blade and the rail tracks which means that the rail cars can take sharper corners than a blade with a relatively larger bowing height.

A further advantage of the reduced bowing height H_{b,2} is that it aids in the manufacture of the blade 40. During blade manufacture, composite material is laid into the mould cavities 84, 90 to produce the outer shells 94, 96 of the blade. As can be seen in Figure 12, the mould cavities are curved to the shape of the airfoil profile between the leading and trailing edges. There will also be curvature of the mould cavities in the direction perpendicular to the plane of the page in Figure 12 for the pre-bend shape. This results in a double curvature of the mould cavities 84, 90. Considering the bowing height H_{b,1} of the standard pre-bent blade and the bowing height H_{b,2} of the blade 40, it can be understood that there is less double curvature in the mould cavities for the blade 40 of the present invention. This aids manufacture because it can be difficult to lay composite material on doubly curved surfaces. For example, glass fibre fabric may wrinkle on a doubly curved surface, and pre-cured composite pultrusions (which may be used for the spar cap) may not follow the correct path in the mould cavity. (This may be explained by considering laying a sheet of paper into a curved cylinder - it can be done without causing any wrinkles in the paper. Now, if a sheet a paper is laid into a bowl with double curvature, it will not be possible to lay the sheet of paper against the surface of the bowl without forming wrinkles in the paper.) By reducing the amount of double curvature, the layup process is simplified.

While the present invention has been illustrated by a description of various preferred embodiments and while these embodiments have been described in some detail, it is not the intention of the Applicant to restrict or in any way limit the scope of the appended claims to such detail. Additional advantages and modifications will readily appear to those skilled in the art. Thus, the various features of the invention may be used alone or in any combination depending on the needs and preferences of the user.

## Claims

1. A horizontal axis upwind wind turbine (10), comprising:
a tower (12);
a nacelle (14) connected to the tower (12); and
a rotor (16) connected to the nacelle (14), the rotor (16) including a hub (18) and at least one wind turbine blade (40) connected to the hub (18), the at least one blade comprising:
an elongate body (42) defining a root end (44), a tip end (46), a leading edge (56), and a trailing edge (58), the elongate body (42) further defining a pitch axis (60) and a blade centre line axis (64) extending along a length of the blade (40), the blade centre line axis (64) defining a pre-bend in the blade (40),
**characterised in that** the curve that defines the blade centre line axis (64) of the elongate body (42) includes at least a first inflection point (I₁) and a second inflection point (I₂) between the root end (44) and the tip end (46) of the blade (40).

2. The wind turbine of claim 1, wherein the first inflection point (I₁) in the blade centre line axis (64) is located in the inner half of the blade length (R).

3. The wind turbine of claim 1 or 2, wherein the first inflection point (I₁) in the blade centre line axis (64) is located between about 20% and about 40% of the blade length (R).

4. The wind turbine of any of the preceding claims, wherein the first inflection point (I₁) in the blade centre line axis (64) is located between about 25% and about 35% of the blade length (R).

5. The wind turbine of any of the preceding claims, wherein the second inflection point (I₂) in the blade centre line axis (64) is located in the outer half of the blade length (R).

6. The wind turbine of any of the preceding claims, wherein the second inflection point (I₂) in the blade centre line axis (64) is located between about 55% and about 75% of the blade length (R).

7. The wind turbine of any of the preceding claims, wherein the second inflection point (I₂) in the blade centre line axis (64) is located between about 60% and about 70% of the blade length (R).

8. The wind turbine of any of the preceding claims, wherein the blade centre line axis (64) does not cross a hypothetical straight line drawn between the root end (44) and the tip end (46).

9. The wind turbine of any of the preceding claims, wherein the pre-bend defined by the blade centre line axis (64) increases monotonically from the root end (44) to the tip end (46), preferably strictly monotonically from the root end to the tip end.

10. The wind turbine of any of the preceding claims, wherein when the rotor (16) faces an oncoming wind and the at least one blade (40) is in an operative position, the at least one blade (40) defines an upwind side and a downwind side.

11. The wind turbine (10) of any of the preceding claims, wherein the blade centre line axis (64) includes:
a first portion (74) between the root end (44) and the first inflection point (I₁) having a centre of curvature (C₁) on the upwind side of the blade (40);
a second portion (76) between the first inflection point (I₁) and the second inflection point (I₂) having a centre of curvature (C₂) on the downwind side of the blade (40); and
a third portion (78) between the second inflection point (I₂) and the tip end (46) having a centre of curvature (C₃) on the upwind side of the blade (40).

12. The wind turbine (10) of any of any of the preceding claims, wherein the at least one blade (40) includes a centre of gravity (CoG), and wherein:
the centre of gravity (CoG) is on the upwind side of the pitch axis (60) of the at least one blade (40) in an aerodynamically unloaded state.

13. The wind turbine (10) of claim 12, wherein the centre of gravity (CoG) is on the downwind side of the pitch axis (60) of the at least one blade (40) in an aerodynamically loaded state with the wind turbine operating at a rated wind speed.

14. The wind turbine of any of the preceding claims, wherein the tip end of the blade points in an upwind direction away from the tower.

15. A method of making a wind turbine blade (40) having a root end (44), a tip end (46), and an outer shell (42), the method comprising:
providing a first mould half (82) having a first mould cavity (84);
providing a second mould half (88) having a second mould cavity (90);
moulding the outer shell (42) of the blade (40) using the first and second mould halves (82, 88),
wherein the first mould cavity (84) and the second mould cavity (90) are contoured such that the outer shell (42) of the blade (40) defines a pitch axis (60) and a blade centre line axis (64) extending along a length of the blade (40), the blade centre line axis (64) defining a pre-bend in the blade (40) and the blade centre line axis does not cross a hypothetical straight line (100) drawn between the root end (44) and the tip end (46), and
wherein the curve that defines the blade centre line axis (64) of the blade (40) includes at least a first inflection point (I₁) and a second inflection point (I₂) between the root end (44) and the tip end (46) of the blade (40).

16. The method of claim 15, wherein moulding the outer shell (42) of the blade (40) using the first and second mould halves (82, 88) further comprises:
moulding a first blade shell (94) in the first mould cavity (84);
moulding a second blade shell (96) in the second mould cavity (90);
arranging the first mould half (82) and the second mould half (88) one over top the other; and
coupling the first blade shell (94) to the second blade shell (96) to form the outer shell (42) of the wind turbine blade (40).

17. The method of claim 15 or 16, wherein the first mould cavity (84) and the second mould cavity (90) are contoured such that the first inflection point (I₁) in the blade centre line axis (64) is located in the inner half of the blade length (R).

18. The method of any of claims 15 to 17, wherein the first inflection point (I₁) in the blade centre line axis (64) is located between about 20% and about 40% of the blade length (R).

19. The method of any of claims 15 to 18, wherein the second inflection point (I₂) in the blade centre line axis (64) is located in the outer half of the blade length (R).

20. The method of any of the claims 15 to 19, wherein the second inflection point (I₂) in the blade centre line axis (64) is located between about 55% and about 75% of the blade length (R).

21. A mould assembly (80) for making a wind turbine blade (40) having a root end (44), a tip end (46), and an outer shell (42), the mould assembly (80) comprising:
a first mould half (82) having a first mould cavity (84);
a second mould half (88) having a second mould cavity (90), wherein the first mould half (82) and the second mould half (88) are arrangeable to form the outer shell (42) of the blade (40);
wherein the first mould cavity (84) and the second mould cavity (90) are contoured such that the outer shell (42) of the wind turbine blade (40) defines a pitch axis (60) and a blade centre line axis (64) extending along a length of the blade (40), the blade centre line axis (64) defining a pre-bend in the blade (40) and the blade centre line axis does not cross a hypothetical straight line (100) drawn between the root end (44) and the tip end (46); and
wherein the curve that defines the blade centre line axis (64) of the blade (40) includes at least a first inflection point (I₁) and a second inflection point (I₂) between the root end (44) and the tip end (46) of the blade (40).

22. The mould assembly (80) of claim 21, wherein the first mould half (82) is configured for forming a first blade shell (94) in the first mould cavity (84), wherein the second mould half (88) is configured for forming a second blade shell (96) in the second mould cavity (84) separately from the moulding of the first blade shell (94), and wherein the first mould half (82) and the second mould half (88) are arrangeable one over top the other to connect the first blade shell (94) and the second blade shell (96) to form the outer shell (42) of the blade (40).

## Patentansprüche

1. Horizontale windwärts gelegene Windkraftanlage (10), umfassend:
einen Turm (12);
eine Gondel (14), die mit dem Turm (12) verbunden ist; und
einen Rotor (16), der mit der Gondel (14) verbunden ist, wobei der Rotor (16) eine Nabe (18) und mindestens ein Windkraftanlagenblatt (40), das mit der Nabe (18) verbunden ist, beinhaltet, wobei das mindestens eine Blatt umfasst:
einen länglichen Körper (42), der ein Wurzelende (44), ein Spitzenende (46), eine Blattvorderkante (56) und eine Blatthinterkante (58) definiert, wobei der längliche Körper (42) weiter eine Blattwinkelachse (60) und eine Blattmittellinienachse (64), die sich entlang einer Länge des Blatts (40) erstreckt, definiert, wobei die Blattmittellinienachse (64) eine Vorwärtskrümmung in dem Blatt (40) definiert,
**dadurch gekennzeichnet, dass** die Kurve, die die Blattmittellinienachse (64) des länglichen Körpers (42) definiert, mindestens einen ersten Wendepunkt (I₁) und einen zweiten Wendepunkt (I₂) zwischen dem Wurzelende (44) und dem Spitzenende (46) des Blatts (40) beinhaltet.

2. Windkraftanlage nach Anspruch 1, wobei der erste Wendepunktt (I₁) in der Blattmittellinienachse (64) in der inneren Hälfte der Blattlänge (R) angeordnet ist.

3. Windkraftanlage nach Anspruch 1 oder 2, wobei der erste Wendepunkt (I₁) in der Blattmittellinienachse (64) zwischen etwa 20 % und etwa 40 % der Blattlänge (R) angeordnet ist.

4. Windkraftanlage nach einem der vorstehenden Ansprüche, wobei der erste Wendepunkt (I₁) in der Blattmittellinienachse (64) zwischen etwa 25 % und etwa 35 % der Blattlänge (R) angeordnet ist.

5. Windkraftanlage nach einem der vorstehenden Ansprüche, wobei der zweite Wendepunkt (I₂) in der Blattmittellinienachse (64) in der äußeren Hälfte der Blattlänge (R) angeordnet ist.

6. Windkraftanlage nach einem der vorstehenden Ansprüche, wobei der zweite Wendepunkt (I₂) in der Blattmittellinienachse (64) zwischen etwa 55 % und etwa 75 % der Blattlänge (R) angeordnet ist.

7. Windkraftanlage nach einem der vorstehenden Ansprüche, wobei der zweite Wendepunkt (I₂) in der Blattmittellinienachse (64) zwischen etwa 60 % und etwa 70 % der Blattlänge (R) angeordnet ist.

8. Windkraftanlage nach einem der vorstehenden Ansprüche, wobei die Blattmittellinienachse (64) eine hypothetische gerade Linie, die zwischen dem Wurzelende (44) und dem Spitzenende (46) gezogen wird, nicht kreuzt.

9. Windkraftanlage nach einem der vorstehenden Ansprüche, wobei die durch die Blattmittellinienachse (64) definierte Vorwärtskrümmung von dem Wurzelende (44) zu dem Spitzenende (46) hin monoton, vorzugsweise streng monoton, zunimmt.

10. Windkraftanlage nach einem der vorstehenden Ansprüche, wobei, wenn der Rotor (16) einem anströmenden Wind zugewandt ist und das mindestens eine Blatt (40) in einer Betriebsposition ist, das mindestens eine Blatt (40) eine windwärts gelegene Seite und eine windabgewandte Seite definiert.

11. Windkraftanlage (10) nach einem der vorstehenden Ansprüche, wobei die Blattmittellinienachse (64) beinhaltet:
einen ersten Abschnitt (74) zwischen dem Wurzelende (44) und dem ersten Wendepunkt (I₁), der einen Krümmungsmittelpunkt (C₁) auf der windwärts gelegenen Seite des Blatts (40) aufweist;
einen zweiten Abschnitt (76) zwischen dem ersten Wendepunkt (I₁) und dem zweiten Wendepunkt (I₂), der einen Krümmungsmittelpunkt (C₂) auf der windabgewandten Seite des Blatts (40) aufweist; und
einen dritten Abschnitt (78) zwischen dem zweiten Wendepunkt (I₂) und dem Spitzenende (46), der einen Krümmungsmittelpunkt (C₃) auf der windwärts gelegenen Seite des Blatts (40) aufweist.

12. Windkraftanlage (10) nach einem der vorstehenden Ansprüche, wobei das mindestens eine Blatt (40) einen Schwerpunkt (CoG) beinhaltet, und wobei:
der Schwerpunkt (CoG) in einem aerodynamisch unbelasteten Zustand auf der windwärts gelegenen Seite der Blattwinkelachse (60) des mindestens einen Blatts (40) ist.

13. Windkraftanlage (10) nach Anspruch 12, wobei der Schwerpunkt (CoG) in einem aerodynamisch belasteten Zustand bei Betrieb der Windkraftanlage mit einer Nennwindgeschwindigkeit auf der windabgewandten Seite der Blattwinkelachse (60) des mindestens einen Blatts (40) ist.

14. Windkraftanlage nach einem der vorstehenden Ansprüche, wobei das Spitzenende des Blatts in einer vom Turm weg windwärts gerichteten Richtung zeigt.

15. Verfahren zum Herstellen eines Windkraftanlagenblatts (40), das ein Wurzelende (44), ein Spitzenende (46) und eine Außenschale (42) aufweist, wobei das Verfahren umfasst:
Bereitstellen einer ersten Formhälfte (82), die einen ersten Formhohlraum (84) aufweist;
Bereitstellen einer zweiten Formhälfte (88), die einen zweiten Formhohlraum (90) aufweist;
Formen der Außenschale (42) des Blatts (40) unter Verwendung der ersten und zweiten Formhälfte (82, 88),
wobei der erste Formhohlraum (84) und der zweite Formhohlraum (90) so konturiert sind, dass die Außenschale (42) des Blatts (40) eine Blattwinkelachse (60) und eine Blattmittellinienachse (64), die sich entlang einer Länge des Blatts (40) erstreckt, definiert, wobei die Blattmittellinienachse (64) eine Vorwärtskrümmung in dem Blatt (40) definiert und die Blattmittellinienachse eine hypothetische gerade Linie (100), die zwischen dem Wurzelende (44) und dem Spitzenende (46) gezogen wird, nicht kreuzt, und
wobei die Kurve, die die Blattmittellinienachse (64) des Blatts (40) definiert, mindestens einen ersten Wendepunkt (I₁) und einen zweiten Wendepunkt (I₂) zwischen dem Wurzelende (44) und dem Spitzenende (46) des Blatts (40) beinhaltet.

16. Verfahren nach Anspruch 15, wobei Formen der Außenschale (42) des Blatts (40) unter Verwendung der ersten und zweiten Formhälfte (82, 88) weiter umfasst:
Formen einer ersten Blattschale (94) in dem ersten Formhohlraum (84);
Formen einer zweiten Blattschale (96) in dem zweiten Formhohlraum (90);
Anordnen der ersten Formhälfte (82) und der zweiten Formhälfte (88) übereinander; und
Koppeln der ersten Blattschale (94) mit der zweiten Blattschale (96), um die Außenschale (42) des Windkraftanlagenblatts (40) zu bilden.

17. Verfahren nach Anspruch 15 oder 16, wobei der erste Formhohlraum (84) und der zweite Formhohlraum (90) so konturiert sind, dass der erste Wendepunkt (I₁) in der Blattmittellinienachse (64) in der inneren Hälfte der Blattlänge (R) angeordnet ist.

18. Verfahren nach einem der Ansprüche 15 bis 17, wobei der erste Wendepunkt (I₁) in der Blattmittellinienachse (64) zwischen etwa 20 % und etwa 40 % der Blattlänge (R) angeordnet ist.

19. Verfahren nach einem der Ansprüche 15 bis 18, wobei der zweite Wendepunkt (I₂) in der Blattmittellinienachse (64) in der äußeren Hälfte der Blattlänge (R) angeordnet ist.

20. Verfahren nach einem der Ansprüche 15 bis 19, wobei der zweite Wendepunkt (I₂) in der Blattmittellinienachse (64) zwischen etwa 55 % und etwa 75 % der Blattlänge (R) angeordnet ist.

21. Formenanordnung (80) zum Herstellen eines Windkraftanlagenblatts (40), das ein Wurzelende (44), ein Spitzenende (46) und eine Außenschale (42) aufweist, wobei die Formenanordnung (80) umfasst:
eine erste Formhälfte (82), die einen ersten Formhohlraum (84) aufweist;
eine zweite Formhälfte (88), die einen zweiten Formhohlraum (90) aufweist, wobei die erste Formhälfte (82) und die zweite Formhälfte (88) so angeordnet sind, dass sie die Außenschale (42) des Blatts (40) bilden;
wobei der erste Formhohlraum (84) und der zweite Formhohlraum (90) so konturiert sind, dass die Außenschale (42) des Windkraftanlagenblatts (40) eine Blattwinkelachse (60) und eine Blattmittellinienachse (64), die sich entlang einer Länge des Blatts (40) erstreckt, definiert, wobei die Blattmittellinienachse (64) eine Vorwärtskrümmung in dem Blatt (40) definiert und die Blattmittellinienachse eine hypothetische gerade Linie (100), die zwischen dem Wurzelende (44) und dem Spitzenende (46) gezogen wird, nicht kreuzt; und
wobei die Kurve, die die Blattmittellinienachse (64) des Blatts (40) definiert, mindestens einen ersten Wendepunkt (I₁) und einen zweiten Wendepunkt (I₂) zwischen dem Wurzelende (44) und dem Spitzenende (46) des Blatts (40) beinhaltet.

22. Formenanordnung (80) nach Anspruch 21, wobei die erste Formhälfte (82) zum Bilden einer ersten Blattschale (94) in dem ersten Formhohlraum (84) konfiguriert ist, wobei die zweite Formhälfte (88) zum Bilden einer zweiten Blattschale (96) in dem zweiten Formhohlraum (84) getrennt von dem Formen der ersten Blattschale (94) konfiguriert ist, und wobei die erste Formhälfte (82) und die zweite Formhälfte (88) so übereinander anordenbar sind, dass sie die erste Blattschale (94) und die zweite Blattschale (96) verbinden, um die Außenschale (42) des Blatts (40) zu bilden.

## Revendications

1. Éolienne face au vent à axe horizontal (10), comprenant :
une tour (12) ;
une nacelle (14) reliée à la tour (12) ; et
un rotor (16) relié à la nacelle (14), le rotor (16) incluant un moyeu (18) et au moins une pale d'éolienne (40) reliée au moyeu (18), la au moins une pale comprenant :
un corps allongé (42) définissant une extrémité de pied (44), une extrémité de pale (46), un bord d'attaque (56) et un bord de fuite (58), le corps allongé (42) définissant en outre un axe de calage (60) et un axe de ligne centrale de pale (64) s'étendant sur toute la longueur de la pale (40), l'axe de ligne centrale de pale (64) définissant une pré-courbure dans la pale (40),
**caractérisée en ce que** la courbe qui définit l'axe de ligne centrale de pale (64) du corps allongé (42) inclut au moins un premier point d'inflexion (I₁) et un deuxième point d'inflexion (I₂) entre l'extrémité du pied (44) et l'extrémité (46) de la pale (40).

2. Éolienne selon la revendication 1, dans laquelle le premier point d'inflexion (I₁) dans l'axe de ligne centrale de pale (64) est situé dans la moitié intérieure de la longueur de la pale (R).

3. Éolienne selon la revendication 1 ou 2, dans laquelle le premier point d'inflexion (I₁) dans l'axe de ligne centrale de pale (64) est situé entre environ 20 % et environ 40 % de la longueur de la pale (R).

4. Éolienne selon l'une quelconque des revendications précédentes, dans laquelle le premier point d'inflexion (I₁) dans l'axe de ligne centrale de pale (64) est situé entre environ 25 % et environ 35 % de la longueur de la pale (R).

5. Éolienne selon l'une quelconque des revendications précédentes, dans laquelle le deuxième point d'inflexion (I₂) dans l'axe de ligne centrale de pale (64) est situé dans la moitié extérieure de la longueur de la pale (R).

6. Éolienne selon l'une quelconque des revendications précédentes, dans laquelle le deuxième point d'inflexion (I₂) dans l'axe de ligne centrale de pale (64) est situé entre environ 55 % et environ 75 % de la longueur de la pale (R).

7. Éolienne selon l'une quelconque des revendications précédentes, dans laquelle le deuxième point d'inflexion (I₂) dans l'axe de ligne centrale de pale (64) est situé entre environ 60 % et environ 70 % de la longueur de la pale (R).

8. Éolienne selon l'une quelconque des revendications précédentes, dans laquelle l'axe de ligne centrale de pale (64) ne croise pas une ligne droite hypothétique tracée entre l'extrémité du pied (44) et l'extrémité de pale (46).

9. Éolienne selon l'une quelconque des revendications précédentes, dans laquelle la pré-courbure définie par l'axe de ligne centrale de pale (64) augmente de manière monotone de l'extrémité du pied (44) à l'extrémité de pale (46), de préférence de manière strictement monotone de l'extrémité du pied à l'extrémité de pale.

10. Éolienne selon l'une quelconque des revendications précédentes, dans laquelle lorsque le rotor (16) fait face à un vent venant et que la au moins une pale (40) est dans une position opérationnelle, la au moins une pale (40) définit un côté face au vent et un côté sous le vent.

11. Éolienne (10) selon l'une quelconque des revendications précédentes, dans laquelle l'axe de ligne centrale de pale (64) inclut :
une première portion (74) entre l'extrémité du pied (44) et le premier point d'inflexion (I₁) présentant un centre de courbure (C₁) du côté face au vent de la pale (40) ;
une seconde portion (76) entre le premier point d'inflexion (I₁) et le deuxième point d'inflexion (I₂) présentant un centre de courbure (C₂) du côté sous le vent de la pale (40) ; et
une troisième portion (78) entre le deuxième point d'inflexion (I₂) et l'extrémité de pale (46) présentant un centre de courbure (C₃) du côté face au vent de la pale (40).

12. Éolienne (10) selon l'une quelconque des revendications précédentes, dans laquelle au moins une pale (40) inclut un centre de gravité (CdG), et dans laquelle :
le centre de gravité (CoG) se trouve du côté face au vent de l'axe de calage (60) de la au moins une pale (40) dans un état aérodynamiquement déchargé.

13. Éolienne (10) de la revendication 12, dans laquelle le centre de gravité (CoG) se trouve du côté sous le vent de l'axe de calage (60) de la au moins une pale (40) dans un état aérodynamiquement chargé, l'éolienne fonctionnant à une vitesse de vent nominale.

14. Éolienne selon l'une quelconque des revendications précédentes, dans laquelle l'extrémité de pale pointe dans une direction face au vent, à l'opposé de la tour.

15. Procédé de fabrication d'une pale d'éolienne (40) présentant une extrémité de pied (44), une extrémité de pale (46) et une paroi extérieure (42), le procédé comprenant :
la fourniture d'une première moitié de moule (82) présentant une première cavité de moule (84) ;
la fourniture d'une deuxième moitié de moule (88) présentant une deuxième cavité de moule (90) ;
le moulage de la paroi extérieure (42) de la pale (40) à l'aide des première et deuxième moitiés de moule (82, 88),
dans lequel la première cavité de moule (84) et la deuxième cavité de moule (90) sont profilées de telle sorte que la paroi extérieure (42) de la pale (40) définisse un axe de calage (60) et un axe de ligne centrale de pale (64) s'étendant sur une longueur de la pale (40), l'axe de ligne centrale de pale (64) définissant une pré-courbure dans la pale (40), et l'axe de ligne centrale de pale ne croise pas une ligne droite hypothétique (100) tracée entre l'extrémité du pied (44) et l'extrémité de pale (46), et
dans lequel la courbe qui définit l'axe de ligne centrale de pale (64) de la pale (40) inclut au moins un premier point d'inflexion (I₁) et un deuxième point d'inflexion (I₂) entre l'extrémité du pied (44) et l'extrémité (46) de pale (40).

16. Procédé selon la revendication 15, dans lequel le moulage de la paroi extérieure (42) de la pale (40) à l'aide des première et deuxième moitiés de moule (82, 88) comprend en outre :
le moulage d'une première paroi de pale (94) dans la première cavité de moule (84) ;
le moulage d'une deuxième paroi de pale (96) dans la deuxième cavité de moule (90) ;
l'agencement de la première moitié du moule (82) et la seconde moitié du moule (88) l'une sur l'autre ; et
le couplage de la première paroi de pale (94) à la deuxième paroi de pale (96) pour former la paroi extérieure (42) de la pale d'éolienne (40).

17. Procédé selon la revendication 15 ou 16, dans lequel la première cavité de moule (84) et la deuxième cavité de moule (90) sont profilées de telle sorte que le premier point d'inflexion (I₁) dans l'axe de ligne centrale de pale (64) soit situé dans la moitié intérieure de la longueur de la pale (R).

18. Procédé selon l'une quelconque des revendications 15 à 17, dans lequel le premier point d'inflexion (I₁) dans l'axe de ligne centrale de pale (64) est situé entre environ 20 % et environ 40 % de la longueur de la pale (R).

19. Procédé selon l'une quelconque des revendications 15 à 18, dans lequel le deuxième point d'inflexion (I₂) dans l'axe de ligne centrale de pale (64) est situé dans la moitié extérieure de la longueur de la pale (R).

20. Procédé selon l'une quelconque des revendications 15 à 19, dans lequel le deuxième point d'inflexion (I₂) dans l'axe de ligne centrale de pale (64) est situé entre environ 55 % et environ 75 % de la longueur de la pale (R).

21. Ensemble moule (80) pour la fabrication d'une pale d'éolienne (40) présentant une extrémité de pied (44), une extrémité de pale (46) et une paroi extérieure (42), l'ensemble moule (80) comprenant :
une première moitié de moule (82) présentant une première cavité de moule (84) ;
une seconde moitié de moule (88) présentant une seconde cavité de moule (90), dans lequel la première moitié de moule (82) et la seconde moitié de moule (88) peuvent être agencées pour former la paroi extérieure (42) de la pale (40) ;
dans lequel la première cavité de moule (84) et la deuxième cavité de moule (90) sont profilées de telle sorte que la paroi extérieure (42) de la pale d'éolienne (40) définisse un axe de calage (60) et un axe de ligne centrale de pale (64) s'étendant sur une longueur de la pale (40), l'axe de ligne centrale de pale (64) définissant une pré-courbure dans la pale (40), et l'axe de ligne centrale de pale ne croise pas une ligne droite hypothétique (100) tracée entre l'extrémité du pied (44) et l'extrémité de pale (46) ; et
dans lequel la courbe qui définit l'axe de ligne centrale de pale (64) de la pale (40) inclut au moins un premier point d'inflexion (I₁) et un deuxième point d'inflexion (I₂) entre l'extrémité du pied (44) et l'extrémité (46) de pale (40).

22. Ensemble moule (80) de la revendication 21, dans lequel la première moitié de moule (82) est configurée pour former une première paroi de pale (94) dans la première cavité de moule (84), dans lequel la seconde moitié de moule (88) est configurée pour former une seconde paroi de pale (96) dans la seconde cavité de moule (84) séparément du moulage de la première paroi de pale (94), et dans lequel la première moitié de moule (82) et la seconde moitié de moule (88) peuvent être disposées l'une sur l'autre pour relier la première paroi de pale (94) et la seconde paroi de pale (96) afin de former la paroi extérieure (42) de la pale (40).
